# EUROPEAN PATENT SPECIFICATION

(11) **EP 3 275 927 B1**
(45) Date of publication and mention of the grant of the patent: **28.07.2021**
(21) Application number: 16768891.0
(22) Date of filing: 24.03.2016
(51) Int. Cl.: C08J 9/00, C08J 9/14, C08L 61/10, C08G 8/10

(54) **PHENOLIC RESIN FOAM AND METHOD FOR PRODUCING PHENOLIC RESIN FOAM**
PHENOLHARZSCHAUMSTOFF UND VERFAHREN ZUR HERSTELLUNG EINES PHENOLHARZSCHAUMSTOFFES
MOUSSE DE RÉSINE PHÉNOLIQUE ET PROCÉDÉ DE PRODUCTION DE MOUSSE DE RÉSINE PHÉNOLIQUE

(30) Priority: 24.03.2015 JP 2015061774; 02.11.2015 JP 2015216179
(43) Date of publication of application: 31.01.2018
(73) Proprietor: Sekisui Chemical Co., Ltd., Osaka-shi, Osaka 530-8565 (JP)
(72) Inventor: TERANISHI, Takeshi, Okayama-shi Okayama 703-8212 (JP); NAGAMORI, Fumitaka, Okayama-shi Okayama 703-8212 (JP)
(74) Representative: Müller-Boré & Partner Patentanwälte PartG mbB
(86) International application number: PCT/JP2016/059434
(87) International publication number: WO 2016/152988

(56) References cited:
- WO-A2-2012/162678
- JP-A- 2001 081 223
- JP-A- 2007 070 505
- JP-A- 2010 522 820
- JP-A- 2013 535 564
- JP-A- 2015 017 268

## Description

The present invention relates to a phenolic resin foam.

Phenolic resin foams are used in various fields as heat insulating materials since they are excellent in flame retardancy, heat resistance, chemical resistance, corrosion resistance and the like. For example, in the field of construction, a wall board formed of a phenolic resin foam is adopted as a synthetic resin building material, particularly as an interior wall plate material.

A phenolic resin foam is generally produced by foaming and curing an expandable phenolic resin composition including a phenolic resin, a blowing agent, and an acid catalyst (curing agent). The thus produced phenolic resin foam has closed cells, and the gas generated from the blowing agent is entrapped within the closed cells.

For example, WO 2012/162678 A2 describes phenolic foams with blowing agent 1,1,1,4,4,4-hexafluoro-2-butene.

It has also been proposed to use a mixture of isopropyl chloride and isopentane as a blowing agent for phenolic resin foam. A phenolic resin foam produced using such a mixture as a blowing agent is essentially free from cell defects and is supposed to exhibit stable and low thermal conductivity (see Patent Document 1).

Patent Document 1: Japanese Patent Granted Publication No. 4939784

However, isopentane is flammable, and phenolic resin foams obtained using a mixture of isopropyl chloride and isopentane as a blowing agent are caused to contain flammable gas in closed cells. Consequently, the flame retardancy of such phenolic resin foams is insufficient.

When isopropyl chloride alone is used as a blowing agent, the flame retardancy of the phenolic resin foam is improved as compared to the case of using a mixture of isopropyl chloride with isopentane; however, there is a problem that the diameter of the closed cell increases, which increases the thermal conductivity and deteriorates the heat insulation of the phenolic resin foam.

The object of the present invention is to provide a phenolic resin foam excellent in flame retardancy and heat insulation.

The embodiments of the present invention are as follows.
<1> A phenolic resin foam including a phenolic resin, a blowing agent and a surfactant,
   the blowing agent comprising two or more types of halogenated hydrocarbons, including at least one type of halogenated unsaturated hydrocarbon,
   the phenolic resin foam having:
   an average cell diameter of 120 µm or less;
   a thermal conductivity of 0.019 W/m·K or less; and
   a limiting oxygen index of 28 % or more,
   wherein the blowing agent comprises a chlorinated saturated hydrocarbon and the chlorinated saturated hydrocarbon is isopropyl chloride, and
   the at least one type of halogenated unsaturated hydrocarbon is at least one selected from the group consisting of trans-1-chloro-3,3,3-trifluoropropene and cis-1,1,1,4,4,4-hexafluoro-2-butene.
<2> The phenolic resin foam according to <1>, wherein a mass ratio of the chlorinated saturated hydrocarbon and the halogenated unsaturated hydrocarbon (chlorinated saturated hydrocarbon : halogenated unsaturated hydrocarbon) in the blowing agent is 9.9:0.1 to 0.1 : 9.9.
<3> The phenolic resin foam according to any one of <1> or <2>, wherein the surfactant includes a silicone surfactant.
<4> The phenolic resin foam according to <3>, wherein the silicone surfactant is a copolymer of dimethylpolysiloxane and a polyether.
<5> The phenolic resin foam according to any one of <1> to <4>, wherein the total amount of the halogenated hydrocarbons in the blowing agent is 70 parts by mass or more, based on 100 parts by mass of the blowing agent.
<6> A method for producing a phenolic resin foam of any one of <1> to <5>, which comprises foaming and curing an expandable phenolic resin composition comprising a phenolic resin, a blowing agent including two or more types of halogenated hydrocarbons, including at least one type of halogenated unsaturated hydrocarbon, an acid catalyst, and a surfactant,
   wherein the blowing agent comprises a chlorinated saturated hydrocarbon and the chlorinated saturated hydrocarbon is isopropyl chloride, and
   the at least one type of halogenated unsaturated hydrocarbon is at least one selected from the group consisting of trans-1-chloro-3,3,3-trifluoropropene and cis-1,1,1,4,4,4-hexafluoro-2-butene.

The present invention can provide a phenolic resin foam excellent in flame retardancy and heat insulation.
FIG. 1 is a graph in which the respective HFO ratios of Comparative Example 1, Examples 1 to 3, and Comparative Example 2 are plotted on the abscissa, and the values of thermal conductivity and cell diameter are plotted on the ordinate.
FIG. 2 is a graph in which the respective HFO ratios of Comparative Example 3, Examples 4 to 6, and Comparative Example 4 are plotted on the abscissa, and the values of thermal conductivity and cell diameter are plotted on the ordinate.
FIG. 3 is a graph in which the respective HFO ratios of Comparative Example 5, Examples 7 to 9, and Comparative Example 6 are plotted on the abscissa, and the values of thermal conductivity and cell diameter are plotted on the ordinate.

The phenolic resin foam of the present invention includes: a cured phenolic resin; and a blowing agent including two or more types of halogenated hydrocarbons, including at least one type of halogenated unsaturated hydrocarbon. The phenolic resin foam of the present invention can be produced by a method including foaming and curing an expandable phenolic resin composition including a phenolic resin, a blowing agent including two or more types of halogenated hydrocarbons, including at least one type of halogenated unsaturated hydrocarbon, and an acid catalyst.

More in detail, the blowing agent comprises a chlorinated saturated hydrocarbon and the chlorinated saturated hydrocarbon is isopropyl chloride, and the at least one type of halogenated unsaturated hydrocarbon is at least one selected from the group consisting of trans-1-chloro-3,3,3-trifluoropropene and cis-1,1,1,4,4,4-hexafluoro-2-butene.

The phenolic resin foam further comprises a surfactant.

If necessary, the phenolic resin foam may further contain components other than the phenolic resin, the blowing agent, the acid catalyst and the surfactant as long as the effect of the present invention is not impaired.

### (Phenolic Resin)

The phenolic resin is preferably of a resole type.

The resol type phenolic resin is a phenolic resin obtained by reacting a phenol compound with an aldehyde in the presence of an alkali catalyst.

Examples of the phenol compound include phenol, cresol, xylenol, paraalkylphenol, paraphenylphenol, resorcinol, and modified products thereof. Examples of the aldehyde include formaldehyde, paraformaldehyde, furfural, and acetaldehyde. Examples of the alkali catalyst include sodium hydroxide, potassium hydroxide, calcium hydroxide, and aliphatic amines (trimethylamine, triethylamine, etc.). However, the phenol compound, the aldehyde and the alkali catalyst are not limited to those described above.

The ratio of the phenol compound to the aldehyde to be used is not particularly limited. The molar ratio of phenol compound: aldehyde is preferably 1 : 1 to 1 : 3, more preferably 1 : 1.3 to 1 : 2.5.

The weight average molecular weight Mw of the phenolic resin as determined by gel permeation chromatography is generally 400 to 3000, preferably 700 to 2000. When the weight average molecular weight Mw is smaller than 400, the closed cell ratio decreases, which tends to cause a decrease in compressive strength and a deterioration in long-term performance in respect of thermal conductivity. In addition, foams with many voids and large average cell diameters are likely to be formed. When the weight average molecular weight Mw is larger than 3000, the viscosities of the phenolic resin material and the phenolic resin composition become too high, so that a large amount of blowing agent is required to obtain a necessary expansion ratio. The use of a large amount of blowing agent is not economical.

### (Blowing Agent)

The blowing agent includes two or more types of halogenated hydrocarbons, including at least one type of halogenated unsaturated hydrocarbon.

The use of two or more types of halogenated hydrocarbons in combination as a blowing agent results in a smaller average cell diameter of closed cells in the phenolic resin foam, as compared to the case of using only one type of halogenated hydrocarbon. This is presumably because, among the two or more types of halogenated hydrocarbons, one having a lower boiling point functions as a nucleating agent in foaming of the expandable phenolic resin composition. The halogenated hydrocarbons have lower thermal conductivity than aliphatic hydrocarbons such as isopentane. With small average cell diameter and low thermal conductivity of the gas in the closed cell, the thermal conductivity of the phenolic resin foam of the present invention is lower and the heat insulating property thereof excels, as compared to the conventional phenolic resin foam.

Further, since halogenated hydrocarbons are flame retardant, the flame retardancy of the phenolic resin foam excels, as compared to the case of using aliphatic hydrocarbons such as isopentane.

As long as the desired effect can be obtained, the blowing agent may contain a component other than the halogenated hydrocarbon (for example, an aliphatic hydrocarbon such as isopentane described above). However, from the viewpoint of reliably obtaining the effect of the blowing agent as described above, the total amount of the halogenated hydrocarbons is preferably 70 parts by mass or more, more preferably 80 parts by mass or more, and especially preferably 90 parts by mass or more, based on 100 parts by mass of the blowing agent. It is also a preferred embodiment of the present invention that the blowing agent is composed only of the halogenated hydrocarbons.

General examples of halogenated unsaturated hydrocarbons include chlorinated unsaturated hydrocarbons, chlorinated fluorinated unsaturated hydrocarbons, fluorinated unsaturated hydrocarbons, brominated fluorinated unsaturated hydrocarbons, and iodinated fluorinated unsaturated hydrocarbons. The halogenated unsaturated hydrocarbon may be one in which all of the hydrogen atoms are replaced with halogen atoms or may be one in which a part of the hydrogen atoms are substituted with halogen atoms.

According to the present invention, in addition to at least one type of halogenated unsaturated hydrocarbon, the blowing agent further includes a chlorinated saturated hydrocarbon.

As general examples of chlorinated saturated hydrocarbons, those having 2 to 5 carbon atoms are mentioned, such as dichloroethane, propyl chloride, isopropyl chloride, butyl chloride, isobutyl chloride, pentyl chloride, and isopentyl chloride.

According to the present invention, the chlorinated saturated hydrocarbon is isopropyl chloride from the viewpoint of low ozone depletion potential and excellent environmental compatibility.

General examples of the chlorinated fluorinated unsaturated hydrocarbon include those having chlorine and fluorine and a double bond in molecules thereof, such as 1,2-dichloro-1,2-difluoroethene (E and Z isomers), 1-chloro-3,3,3-trifluoropropene (HCFO-1233zd) (E and Z isomers) (e.g., SOLSTICE LBA (trade name), manufactured by HoneyWell), 1-chloro-2,3,3-trifluoropropene (HCFO-1233 yd) (E and Z isomers), 1-chloro-1,3,3-trifluoropropene (HCFO-1233zb) (E and Z isomers), 2-chloro-1,3,3-trifluoropropene (HCFO-1233 xe) (E and Z isomers), 2-chloro-2,2,3-trifluoropropene (HCFO -1233 xc), 2-chloro-3,3,3-trifluoropropene (HCFO-1233 xf) (e.g., product number: 1300-7-09, manufactured by SynQuest Laboratories), 3-chloro-1,2,3-trifluoropropene (HCFO-1233ye) (E and Z isomers), 3-chloro-1,1,2-trifluoropropene (HCFO-1233yc), 3,3-dichloro-3-fluoropropene, 1,2-dichloro-3,3,3-trifluoropropene (HFO-1223xd) (E and Z isomers), 2-chloro-1,1,1,4,4,4-hexafluoro-2-butene (E and Z isomers), and 2-chloro-1,1,1,3,4,4,4-heptafluoro-2-butene (E and Z variants).

General examples of the fluorinated unsaturated hydrocarbon include those having fluorine and a double bond in molecules thereof, such as 2,3,3,3-tetrafluoropropene (HFO-1234yf), 1,3,3,3-tetrafluoropropene (HFO-1234ze) (E and Z isomers), and 1,1,1,4,4,4-hexafluoro-2-butene (HFO 1336 mzz) (E and Z isomers) (e.g., product number: 1300-3-Z6, manufactured by SynQuest Laboratories Ltd.), which are disclosed in Japanese Unexamined Patent Application Publication (Translation of PCT Application) No. 2009-513812.

The blowing agent may further include a fluorinated saturated hydrocarbon. Examples of the fluorinated saturated hydrocarbon include hydrofluorocarbons such as difluoromethane (HFC 32), 1,1,1,2,2-pentafluoroethane (HFC 125), 1,1,1-trifluoroethane (HFC 143 a), 1,1, 2,2-tetrafluoroethane (HFC 134), 1,1,1,2-tetrafluoroethane (HFC 134a), 1,1-difluoroethane (HFC 152a), 1,1,1,2,3,3,3-heptafluoropropane (HFC 227 ea), 1,1,1,3,3-pentafluoropropane (HFC 245 fa), 1,1,1,3,3-pentafluorobutane (HFC 365 mfc) and 1,1,1,2,2,3,4,5,5,5-decafluoropentane (HFC 4310 mee).

The halogenated unsaturated hydrocarbon contained in the blowing agent is advantageous in that the ozone depletion potential (ODP) and the global warming potential (GWP) are small and, hence, the influence on the environment is small. More specifically, according to the present invention, the at least one type of halogenated unsaturated hydrocarbon comprised in the blowing agent is at least one selected from the group consisting of trans-1-chloro-3,3,3-trifluoropropene and cis-1,1,1,4,4,4-hexafluoro-2-butene.

The chlorinated saturated hydrocarbons have hitherto been used as blowing agents for phenolic resin foams; however, the use of a single type thereof results in a large average cell diameter of the phenolic resin foam, which leads to a high thermal conductivity. When the fluorinated unsaturated hydrocarbon is used in combination with the chlorinated saturated hydrocarbon, the average cell diameter and the thermal conductivity decrease, so that the heat insulation of the phenolic resin foam improves. Also, since the halogenated unsaturated hydrocarbon is nonflammable, the flame retardancy of the phenolic resin foam improves.

With respect to the combination of the chlorinated saturated hydrocarbon and the halogenated unsaturated hydrocarbon, the mass ratio of the chlorinated saturated hydrocarbon and the halogenated unsaturated hydrocarbon is preferably 9.9 : 0.1 to 0.1 : 9.9. By the presence of the halogenated unsaturated hydrocarbon in an amount satisfying the above-mentioned mass ratio, the average cell diameter and the thermal conductivity decrease, so that the heat insulation of the phenolic resin foam becomes more excellent.

In the present invention, the chlorinated saturated hydrocarbon has a smaller molecular weight than the halogenated unsaturated hydrocarbon. If the amounts of the compounds are the same, the compound of a smaller molecular weight results in a foam having a larger volume. Therefore, when the molecular weight of the chlorinated saturated hydrocarbon is smaller than the molecular weight of the halogenated unsaturated hydrocarbon, sufficient foaming with a smaller amount of blowing agent can be more easily achieved as the proportion of chlorinated saturated hydrocarbon increases. Further, chlorinated saturated hydrocarbons tend to be less expensive than halogenated unsaturated hydrocarbons. From these viewpoints, the mass ratio of the chlorinated saturated hydrocarbon to the halogenated unsaturated hydrocarbon is preferably 9.9 : 0.1 to 5 : 5, and more preferably 9 : 1 to 7 : 3. When the molar ratio is within the above range, the production cost for the phenolic resin foam can be decreased while maintaining excellent heat insulation as the ratio of halogenated unsaturated hydrocarbon decreases.

On the other hand, halogenated unsaturated hydrocarbons tend to have lower thermal conductivity than chlorinated saturated hydrocarbons. Therefore, from the viewpoint of obtaining superior heat insulation, the mass ratio of the chlorinated saturated hydrocarbon and the halogenated unsaturated hydrocarbon is preferably 5 : 5 to 0.1 : 9.9. When the molar ratio is within the above range, the higher the ratio of the halogenated unsaturated hydrocarbon, the lower the thermal conductivity and the higher the heat insulation.

The blowing agent may further contain a blowing agent other than the halogenated hydrocarbon, if necessary. Such other blowing agent is not particularly limited, and examples thereof include aliphatic hydrocarbons having from 3 to 7 carbon atoms (e.g., butane, isobutane, pentane, isopentane, hexane and heptane), low boiling point gases such as nitrogen, argon, carbon dioxide gas and air; chemical blowing agents such as sodium hydrogen carbonate, sodium carbonate, calcium carbonate, magnesium carbonate, azodicarboxylic acid amide, azobisisobutyronitrile, barium azodicarboxylate, N,N'-dinitrosopentamethylenetetramine, p,p'-oxybis(benzenesulfonyl hydrazide) and trihydrazinotriazine; and a porous solid materials.

The amount of the blowing agent in the phenolic resin foam (or expandable phenolic resin composition) is preferably 1 to 20 parts by mass, more preferably 3 to 15 parts by mass, and still more preferably 5 to 11 parts by mass, relative to 100 parts by mass of the phenolic resin.

With respect to the formulation of the blowing agent present in the expandable phenolic resin composition used for producing the phenolic resin foam, the mass ratio of the two or more types of halogenated hydrocarbons approximately coincides with the mass ratio the two or more types of halogenated hydrocarbons present in the phenolic resin foam.

The mass ratio of the two or more types of halogenated hydrocarbons present in the phenolic resin foam can be confirmed by, for example, the following solvent extraction method.

### Solvent Extraction Method:

Using a standard gas of the halogenated hydrocarbon, the retention time in a gas chromatograph-mass spectrometer (GC/MS) under the following measurement conditions is determined in advance. Next, 1.6 g of a phenolic resin foam sample from which upper and lower surface materials have been peeled off is taken in a glass vessel for pulverization, followed by addition of 80 mL of tetrahydrofuran (THF). The sample is crushed to such an extent that the sample can be dipped in the solvent, whereafter a pulverization-extraction is carried out with a homogenizer for 1 minute and 30 seconds, and the resulting extract is filtered over a membrane filter having a pore diameter of 0.45 µm. The resulting filtrate is subjected to GC/MS. The type of halogenated unsaturated hydrocarbon is identified from the retention time and the mass spectrum obtained in advance. Also, the types of other halogenated hydrocarbons are identified by the retention time and the mass spectrum. The detection sensitivities of the blowing agent components are measured by respective standard gases, and the composition (mass ratio) is calculated from the detection areas and detection sensitivities of the gas components obtained by the above GC/MS.
GC/MS measurement conditions:
Column used: DB-5 ms (Agilent Technologies, Inc.) 60 m, inner diameter 0.25 mm, film thickness 1 µm
Column temperature: 40 °C (10 minutes) - 10 °C/min - 200 °C
Inlet temperature: 200 °C
Interface temperature: 230 °C
Carrier gas: He 1.0 mL/min
Split ratio: 20:1
Measurement method: scanning method m/Z = 11 to 550

### (Acid Catalyst)

The acid catalyst is incorporated into the expandable phenolic resin composition in order to cure the phenolic resin.

Examples of the acid catalyst include organic acids such as benzenesulfonic acid, ethylbenzenesulfonic acid, paratoluenesulfonic acid, xylenesulfonic acid, naphthalenesulfonic acid, and phenolsulfonic acid; and inorganic acids such as sulfuric acid and phosphoric acid. With respect to the acid catalyst, a single type thereof may be used individually or two or more types thereof may be used in combination.

The amount of the acid catalyst in the expandable phenolic resin composition is preferably 5 to 30 parts by mass, more preferably 8 to 25 parts by mass, and still more preferably 10 to 20 parts by mass, relative to 100 parts by mass of the phenolic resin.

### (Surfactant)

The surfactant contributes to reduction of the bubble diameter (cell diameter).

The surfactant is not particularly limited, and any surfactant known as a foam stabilizer or the like may be used. Examples of the surfactant include alkylene oxide adducts of castor oil, silicone surfactants, and polyoxyethylene sorbitan fatty acid esters. With respect to the surfactant, a single type thereof may be used individually or two or more types thereof may be used in combination.

The surfactant preferably contains one or both of an alkylene oxide adduct of castor oil and a silicone surfactant from the viewpoint of easily forming bubbles with a smaller diameter, and more preferably contains a silicone surfactant from the viewpoint of decreasing the thermal conductivity of the phenolic resin foam and increasing the flame retardancy of the phenolic resin foam.

As the alkylene oxide in the alkylene oxide adduct of castor oil, an alkylene oxide having 2 to 4 carbon atoms is preferable, and ethylene oxide (hereinafter abbreviated as "EO") and propylene oxide (hereinafter abbreviated as "PO") are more preferable. With respect to the alkylene oxide added to castor oil, a single type thereof may be used individually or two or more types thereof may be used in combination.

As the alkylene oxide adduct of castor oil, an EO adduct and a PO adduct of castor oil are preferable.

The alkylene oxide adduct of castor oil is preferably one obtained by adding an alkylene oxide, especially EO, in an amount of more than 20 moles and less than 60 moles, more preferably 21 to 40 moles, per 1 mole of castor oil. In such an alkylene oxide adduct of castor oil, a hydrophobic group composed mainly of a long-chain hydrocarbon group of castor oil and a hydrophilic group composed mainly of a polyoxyalkylene group (polyoxyethylene group or the like) formed by addition reaction of a predetermined molar amount of alkylene oxide (EO or the like) are arranged in a well-balanced manner in the molecule, whereby a good surface activation performance is exhibited. Consequently, the cell diameter of the phenolic resin foam decreases. Also, flexibility is imparted to the cell walls to prevent the occurrence of cracks.

Examples of the silicone surfactant include a copolymer of dimethylpolysiloxane and a polyether, and an organopolysiloxane compound such as octamethylcyclotetrasiloxane. A copolymer of dimethylpolysiloxane and a polyether is preferred in that it is easy to adjust the surface tension by changing the degrees of polymerization of the hydrophobic part and the hydrophilic part.

The copolymer of dimethylpolysiloxane and a polyether is preferably a block copolymer of dimethylpolysiloxane and a polyether. The structure of the block copolymer is not particularly limited. For example, the block copolymer is of an ABA type in which polyether chains A are bonded to both terminals of siloxane chain B, an (AB)n type in which plural siloxane chains B and plural polyether chains A are alternately bonded, a branched type in which a polyether chain is bonded to each terminal of a branched siloxane chain, and a pendant type in which a polyether chain is bonded as a side group (a group bonded to a part other than a terminal) to a siloxane chain.

As an example of the copolymer of dimethylpolysiloxane and a polyether, dimethylpolysiloxane-polyoxyalkylene copolymer can be mentioned.

Each oxyalkylene group in polyoxyalkylene preferably has 2 or 3 carbon atoms.

The oxyalkylene groups constituting the polyoxyalkylene may be of one type or two or more types.

Specific examples of the dimethylpolysiloxane-polyoxyalkylene copolymer include a dimethylpolysiloxane-polyoxyethylene copolymer, a dimethylpolysiloxane-polyoxypropylene copolymer, and a dimethylpolysiloxane-polyoxyethylene-polyoxypropylene copolymer.

As the copolymer of dimethylpolysiloxane and a polyether, one having a polyether chain having a terminal -OR group (wherein R is a hydrogen atom or an alkyl group) is preferable. R in the above -OR group is especially preferably a hydrogen atom for lower thermal conductivity and higher flame retardancy of the phenolic resin foam.

The amount of the surfactant in the expandable phenolic resin composition is preferably from 1 to 10 parts by mass, and more preferably from 2 to 5 parts by mass, relative to 100 parts by mass of the phenolic resin. When the amount of the surfactant is not less than the lower limit value of the above range, the cell diameters tend to be uniformly reduced, and when the amount is not more than the upper limit value, the water absorptivity of the phenolic resin foam is low and the production cost is suppressed as well.

### (Other components)

As other components, those known as additives for phenolic resin foam can be added to the expandable phenolic resin composition, and examples thereof include urea, a plasticizer, a filler, a flame retardant (for example, a phosphorus flame retardant, etc.), a crosslinking agent, an organic solvent, an amino group-containing organic compound, and a coloring agent.

Urea can be used as a formaldehyde catcher for capturing formaldehyde in the production of a foam by foam molding of the expandable phenolic resin composition. Examples of the plasticizer include polyester polyol which is a reaction product of phthalic acid and diethylene glycol, and polyethylene glycol.

Conventionally, it is known to add a plasticizer having a high compatibility with a phenolic resin which is hydrophilic, for example, a polyester polyol, in order to decrease the viscosity of the phenolic resin (for example, Japanese Patent No. 4761446). However, since the above halogenated hydrocarbons, especially halogenated unsaturated hydrocarbons, have high polarity in their molecules, the use of such a plasticizer in combination with a blowing agent containing a large amount of halogenated hydrocarbon may result in excessively reduced viscosity of the phenolic resin, thereby causing disadvantages such as insufficient foaming and oozing of the phenolic resin from the surface material. Therefore, when a halogenated unsaturated hydrocarbon is used as a blowing agent, it is preferable not to use a plasticizer.

As the filler, for example, a basic filler can be mentioned. The basic filler is preferably an inorganic filler because it can impart the phenolic resin foam with low acidity and improved fire resistance.

Examples of the inorganic filler include hydroxides and oxides of metals such as aluminum hydroxide, magnesium hydroxide, calcium oxide, magnesium oxide, aluminum oxide, zinc oxide, titanium oxide, and antimony oxide; powders of metals such as zinc; metal carbonates such as calcium carbonate, magnesium carbonate, barium carbonate, and zinc carbonate; alkali metal hydrogencarbonates such as sodium hydrogencarbonate, and potassium hydrogencarbonate; alkaline earth metal hydrogencarbonates such as calcium hydrogencarbonate, and magnesium hydrogencarbonate; and others such as calcium sulfate, barium sulfate, calcium silicate, mica, talc, bentonite, zeolite, and silica gel. However, when a strong acid is used as the acid catalyst, it is necessary to add the metal powder or the carbonate in an amount range such that the adjustment of the pot life is not unfavorably affected. With respect to the inorganic fillers, a single type thereof may be used individually or two or more types thereof may be used in combination.

When the expandable phenolic resin composition contains a basic filler, the amount of the basic filler in the expandable phenolic resin composition is preferably such that the extraction pH is 5 or more. For example, the amount of the basic filler is preferably 0.1 to 30 parts by mass, more preferably 1 to 20 parts by mass, still more preferably 3 to 15 parts by mass, and especially preferably 5 to 10 parts by mass, relative to 100 parts by mass of the phenolic resin. When the amount of the basic filler is less than the above lower limit value, the extraction pH of the phenolic resin foam becomes low. The lower the extraction pH, the higher the acidity, so that the material contacting the phenolic resin foam may be corroded. When the amount of the basic filler exceeds the above upper limit value, the curing reaction by the acid catalyst may be considerably hindered, thereby deteriorating the productivity.

The extraction pH can be measured by the following method. The phenolic resin foam is crushed to a size of 250 µm (60 mesh) or less in a mortar to prepare a sample. 0.5 g of the sample is weighed into a 200 mL Erlenmeyer flask with stopper. 100 mL of pure water is added to the Erlenmeyer flask with stopper, and the flask is sealed tightly. Using a magnetic stirrer, the inside of Erlenmeyer flask with stopper is stirred at 23 °C ± 5 °C for 7 days to prepare a sample liquid. The pH of the obtained sample solution is measured with a pH meter and the value is taken as the extracted pH.

The basic filler also functions as a protective agent for trapping hydrogen fluoride. Halogenated unsaturated hydrocarbons used as the blowing agent are known to generate hydrogen fluoride by decomposition and to contain, as an impurity, hydrogen fluoride used as a raw material for production of the blowing agent (see Japanese Unexamined Patent Application Publication (Translation of PCT Application) No. 2014-511930). This hydrogen fluoride is highly reactive and is not only harmful to the human body but also reacts with the siloxane bonds in the hydrophobic part of the silicone surfactant to lower the surface activation function of the surfactant. Therefore, the above-mentioned basic filler may be added to the expandable phenolic resin composition as a hydrogen fluoride scavenger or a surfactant protective agent. In particular, it is preferable to use a basic inorganic filler such as calcium carbonate among the above fillers because the extraction pH can be increased.

On the other hand, as a result of investigations by the present inventors, it was found that the thermal conductivity of the phenolic resin foam tends to decrease as the amount of the inorganic filler decreases. Therefore, from the viewpoint of heat insulation, the amount of the inorganic filler in the expandable phenolic resin composition is preferably less than 0.1 part by mass, and more preferably 0 part by mass, relative to 100 parts by mass of the phenolic resin. That is, it is preferable that the expandable phenolic resin composition does not contain an inorganic filler.

The expandable phenolic resin composition can be prepared by mixing the above-mentioned components.

The mixing order of the components is not particularly limited, but for example, the expandable phenolic resin composition can be prepared by adding a surfactant and, if necessary, other components to a phenolic resin, mixing the resulting mixture thoroughly, adding a blowing agent and an acid catalyst to the mixture, and supplying the mixture to a mixer to stir the mixture.

By foaming and curing the expandable phenolic resin composition, the phenolic resin foam of the present invention can be produced.

The production of the phenolic resin foam can be carried out by a known method. For example, the phenolic resin foam can be produced by foaming and curing the expandable phenolic resin composition by heating at 30 to 95 °C.

In the foam molding to produce the phenolic resin foam, a surface material may be provided.

The surface material is not particularly limited, but it is preferable to use at least one type of surface material selected from the group consisting of glass paper, glass fiber woven fabric, glass fiber nonwoven fabric, glass fiber mixed paper, kraft paper, synthetic fiber nonwoven fabrics made of polyester, polypropylene, nylon, etc., spunbonded nonwoven fabric, aluminum foil-laminated nonwoven fabric, aluminum foil-laminated kraft paper, metal plate, metal foil, plywood, calcium silicate plate, gypsum board and woody cement board.

The surface material may be provided on one side or both sides of the phenolic resin foam. When the surface materials are provided on both sides of the phenolic resin foam, the surface materials may be the same or different.

In the production of the phenolic resin foam, the surface material(s) can be provided, for example, by a method in which a surface material is placed on a continuously running conveyor belt, the expandable phenolic resin composition is discharged onto the surface material, another surface material is overlaid on the composition, and the resulting is passed through a heating furnace, to thereby perform a foam molding. Thus, a surface material-attached phenolic resin foam is obtained, which has surface materials laminated on both sides of a sheet-like phenolic resin foam.

Alternatively, the surface material may be provided by bonding the surface material to the phenolic resin foam with an adhesive after the foam molding.

In the phenolic resin foam of the present invention, a plurality of cells are formed with substantially no pores in the cell walls thereof, and at least a part of the cells are closed cells not communicating with each other. Two or more kinds of halogenated hydrocarbon gases used as blowing agents are held in closed cells. The closed cell ratio is generally 85 % or more, and more preferably 90 % or more. The closed cell ratio is measured in accordance with JIS K 7138: 2006.

The average cell diameter of the phenolic resin foam of the present invention is 120 µm or less, preferably 5 to 120 µm, and more preferably 50 to 120 µm. When the average cell diameter is 120 µm or less, convection and radiation in the cells are suppressed, whereby the phenolic resin foam exhibits low thermal conductivity and excellent heat insulation.

The average cell diameter of the phenolic resin foam can be adjusted by the type and composition of the blowing agent, the type of surfactant, foaming conditions (heating temperature, heating time, etc.) and the like. In particular, a blowing agent having a composition in which two or more types of halogenated hydrocarbons are used in combination can reduce the average cell diameter, and the mass ratio of the chlorinated saturated hydrocarbon to the fluorinated unsaturated hydrocarbon in the range of 9.9 : 0.1 to 0.1 : 9.9 tends to result in a smaller average cell diameter than when the mass ratio is outside this range.

The thermal conductivity of the phenolic resin foam of the present invention is 0.019 W/m·K or less, and more preferably 0.018 W/m·K or less. When the heat conductivity is 0.019 W/m·K or less, the phenolic resin foam exhibits excellent heat insulation.

The thermal conductivity of the phenolic resin foam can be adjusted by the average cell diameter, the type and composition of the blowing agent, the type of surfactant, and the like. For example, as described above, a smaller average cell diameter tends to result in a lower thermal conductivity of the phenolic resin foam. Further, when the surfactant is a silicone surfactant, especially one having a polyether chain with a -OH terminal, the thermal conductivity tends to be low as compared to the case of using other surfactant.

The phenolic resin foam of the present invention has a limiting oxygen Index (hereinafter also referred to as "LOI") of 28 % or more, and preferably 30 % or more.

LOI is a flammability indicator that is a minimum oxygen concentration (%) (volume fraction) of an oxygen/nitrogen mixed gas at 23 °C ± 2 °C necessary to keep a sample burning with flame under specified conditions. A larger LOI means lower flammability and, in general, the LOI of 26 % is a threshold for judging that a subject has flame retardancy.

The LOI of the phenolic resin foam can be adjusted by the type and composition of the blowing agent, the type of surfactant, the type, composition and amount of the flame retardant, and the like. For example, the lower the amount of combustible blowing agent in the blowing agent (the higher the amount of halogenated hydrocarbon), the higher the LOI. Further, when the surfactant is a silicone surfactant, especially one having a polyether chain with a -OH terminal, the LOI tends to be high as compared to the case of using other surfactant. The LOI can also be increased by adding a phosphorus flame retardant or the like.

The density (JIS A 9511: 2009) of the phenolic resin foam of the present invention is preferably 10 kg/mm³ or more, and more preferably 20 to 100 kg/mm³ or more.

The brittleness (JIS A 9511: 2003) of the phenolic resin foam of the present invention is preferably 20 % or less, and more preferably 10 to 18 %.

### Examples

Hereinbelow, the present invention will be described in more detail with reference to the Examples which, however, should not be construed as limiting the present invention.

Measurement methods used in the Examples and Comparative Examples described below are as follows.

### (Average Cell Diameter)

A test piece was cut out from substantially the center in the thickness direction of the phenolic resin foam. An image of the cut surface in the thickness direction of the test piece was taken with a magnification of 50 times. Four straight lines of 9 cm in length were drawn in the taken image.

Each straight line was drawn while avoiding voids (gaps of 2 mm² or more). The number of cells traversed by each straight line (the number of cells measured according to JIS K 6400 - 1: 2004) was counted for each straight line, and the average value per straight line was obtained. The average value of the number of cells was divided by 1800 µm, and the obtained value was taken as the average cell diameter.

### (Thermal conductivity)

The thermal conductivity of phenolic resin foam was measured in accordance with JIS A 9511: 2009. Measurements were performed twice on the same sample.

### (LOI)

The limiting oxygen index (LOI) of phenolic resin foam was measured in accordance with JIS K 7201-2: 2007.

### <Comparative Example 1, Examples 1 to 3, Comparative Example 2>

4 Parts by mass of castor oil EO adduct (addition molar number: 30) as a surfactant, 4 parts by mass of urea as a formaldehyde catcher were added to 100 parts by mass of liquid resol type phenolic resin (trade name: PF-339, manufactured by Asahi Yukizai Corporation), followed by mixing, and the resulting mixture was allowed to stand at 20 °C for 8 hours.

To 108 parts by mass of the mixture thus obtained were added 10.5 parts by mass of one of the following blowing agents 1 to 5 as a blowing agent, 16 parts by weight of a mixture of paratoluenesulfonic acid and xylene sulfonic acid as an acid catalyst, 3 parts by mass of calcium carbonate as a filler, and 3 parts by mass of polyester polyol as a plasticizer, followed by stirring to mix these components, thereby preparing an expandable phenolic resin composition.

This expandable phenolic resin composition was discharged into a mold of 300 × 300 × 45 mm, which had been heated for 300 seconds in a dryer at 70 °C to foam mold the composition. The resulting molded product was taken out from the mold and placed in a dryer heated to 85 °C where the molded product was cured for 5 hours, thereby preparing a phenolic resin foam. The extraction pH of the resulting phenolic resin foam was measured and found to be 5 to 6 in each of the Examples and Comparative Examples.
Blowing agent 1: isopropyl chloride
Blowing agent 2: mixture of isopropyl chloride and
   cis-1,1,1,4,4,4-hexafluoro-2-butene with an isopropyl chloride :
   cis-1,1,1,4,4,4-hexafluoro-2-butene mass ratio of 89 : 11
Blowing agent 3: mixture of isopropyl chloride and
   cis-1,1,1,4,4,4-hexafluoro-2-butene with an isopropyl chloride :
   cis-1,1,1,4,4,4-hexafluoro-2-butene mass ratio of 80 : 20
Blowing agent 4: mixture of isopropyl chloride and
   cis-1,1,1,4,4,4-hexafluoro-2-butene with an isopropyl chloride :
   cis-1,1,1,4,4,4-hexafluoro-2-butene mass ratio of 71 : 29
Blowing agent 5: cis-1,1,1,4,4,4-hexafluoro-2-butene

The average cell diameter, thermal conductivity and LOI of the phenolic resin foam obtained in each of the Examples and Comparative Examples were measured. However, in Comparative Example 2, the mold had a portion which had not been filled with a molded product after the foam molding, so that foaming was insufficient; therefore, the thermal conductivity and average cell diameter were not measured. The results are shown in Table 1.

Table 1 also shows the mass ratio of cis-1,1,1,4,4,4-hexafluoro-2-butene relative to the total mass (100) of isopropyl chloride and cis-1,1,1,4,4,4-hexafluoro-2-butene (hereinafter, also referred to as "HFO ratio") with respect to each of the blowing agents.

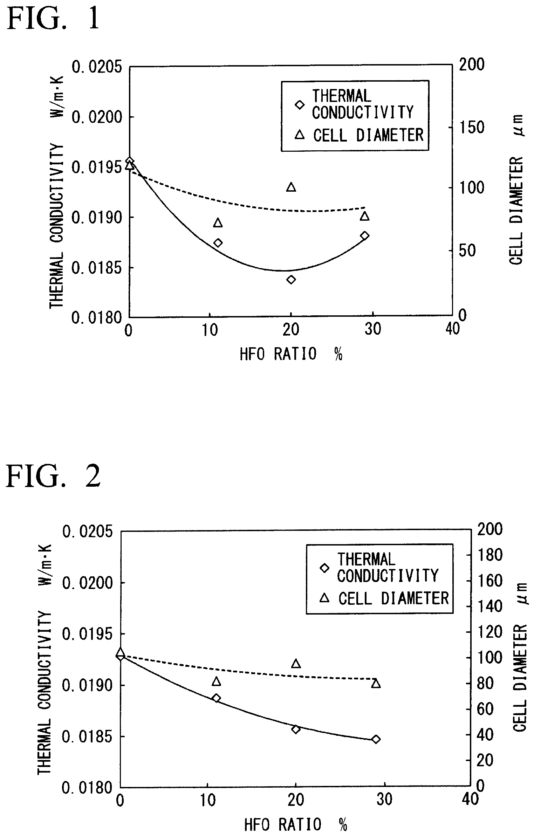

Further, FIG. 1 shows a graph in which the respective HFO ratios of Comparative Example 1, Examples 1 to 3, and Comparative Example 2 are plotted on the abscissa, and the values of thermal conductivity and cell diameter are plotted on the ordinate.

**[Table 1]**

| | Blowing agent | HF0 ratio of blowing agent | Thermal conductivity (W/m·K) | Average cell diameter (*µ*m) | L0I |
|---|---|---|---|---|---|
| Comp. Ex. 1 | 1 | 0 | 0.01926 | 121.2 | 31.59 |
| Ex. 1 | 2 | 11 | 0.01874 | 96.1 | 31.81 |
| Ex. 2 | 3 | 20 | 0.01827 | 115.3 | 31.45 |
| Ex. 3 | 4 | 29 | 0.01880 | 105.3 | 31.53 |
| Comp. Ex. 2 | 5 | 100 | Not measured due to defective filling of mold | | 36. 79 |

As apparent from the above results, the phenolic resin foam of each of Examples 1 to 3 in which isopropyl chloride and cis-1,1,1,4,4,4-hexafluoro-2-butene were used in combination as blowing agents had a smaller average cell diameter and a lower thermal conductivity than the phenolic resin foam of Comparative Example 1 in which isopropyl chloride was used alone as a blowing agent. Further, the LOI values in Examples 16 to 27 were 28 % or more, which means that the flame retardancy was excellent.

In Comparative Example 2 using cis-1,1,1,4,4,4-hexafluoro-2-butene alone, the expandable phenolic resin composition was not sufficiently foamed under the same foam molding conditions as in Examples 1 to 3, and the resulting product was of low practical utility.

### <Comparative Example 3, Examples 4 to 6, Comparative Example 4>

4 Parts by mass of silicone surfactant (trade name "SH 193", manufactured by Dow Corning Toray Co., Ltd., terminals of polyether chain: - OH) as a surfactant, and 4 parts by mass of urea as a formaldehyde catcher were added to 100 parts by mass of liquid resol type phenolic resin (trade name: PF-339, manufactured by Asahi Yukizai Corporation), followed by mixing, and the resulting mixture was allowed to stand at 20 °C for 8 hours.

To 108 parts by mass of the mixture thus obtained were added 10.5 parts by mass of one of the above blowing agents 1 to 5 as a blowing agent, 16 parts by weight of a mixture of paratoluenesulfonic acid and xylene sulfonic acid as an acid catalyst, 3 parts by mass of calcium carbonate as a filler, and 3 parts by mass of polyester polyol as a plasticizer, followed by stirring to mix these components, thereby preparing an expandable phenolic resin composition.

This expandable phenolic resin composition was discharged into a mold of 300 × 300 × 45 mm, which had been heated for 300 seconds in a dryer at 70 °C. The resulting molded product was taken out from the mold and placed in a dryer heated to 85 °C where the molded product was cured for 5 hours, thereby preparing a phenolic resin foam. The extraction pH of the resulting phenolic resin foam was measured and found to be 5 to 6 in each of the Examples and Comparative Examples.

The average cell diameter, thermal conductivity and LOI of the phenolic resin foam obtained in each of the Examples and Comparative Examples were measured. However, in Comparative Example 4, the mold had a portion which had not been filled with a molded product after the foam molding, so that foaming was insufficient; therefore, the thermal conductivity and average cell diameter were not measured. The results are shown in Table 2. Table 2 also shows the HFO ratio with respect to each of the blowing agents.

Further, FIG. 2 shows a graph in which the respective HFO ratios of Comparative Example 3, Examples 4 to 6, and Comparative Example 4 are plotted on the abscissa, and the values of thermal conductivity and cell diameter are plotted on the ordinate.

**[Table 2]**

| | Blowing agent | HF0 ratio of blowing agent | Thermal conductivity (W/m·K) | Average cell diameter (*µ*m) | L0I |
|---|---|---|---|---|---|
| Comp. Ex. 3 | 1 | 0 | 0.01928 | 121.8 | 33.69 |
| Ex. 4 | 2 | 11 | 0.01887 | 95.6 | 33.99 |
| Ex. 5 | 3 | 20 | 0.01856 | 106.1 | 33. 55 |
| Ex. 6 | 4 | 29 | 0.01846 | 95.7 | 34.17 |
| Comp. Ex. 4 | 5 | 100 | Not measured due to defective filling of mold | | 36.31 |

As apparent from the above results, the phenolic resin foam of each of Examples 4 to 6 in which isopropyl chloride and cis-1,1,1,4,4,4-hexafluoro-2-butene were used in combination as blowing agents had a smaller average cell diameter and a lower thermal conductivity than the phenolic resin foam of Comparative Example 3 in which isopropyl chloride was used alone as a blowing agent. Further, the LOI values in Examples 4 to 6 were 28 % or more, which means that the flame retardancy was excellent.

In Comparative Example 4 using cis-1,1,1,4,4,4-hexafluoro-2-butene alone, the expandable phenolic resin composition was not sufficiently foamed under the same foam molding conditions as in Examples 4 to 6, and the resulting product was of low practical utility.

### <Comparative Example 5, Examples 7 to 9, Comparative Example 6>

A phenolic resin foam was prepared in the same manner as in Comparative Example 3, Examples 4 to 6, and Comparative Example 4, except that the surfactant was changed to a silicone surfactant (trade name "SF 2936 F", manufactured by Dow Corning Toray Co., Ltd., terminals of polyether chain: - OR (R is an alkyl group)).

The average cell diameter, thermal conductivity and LOI of the phenolic resin foam obtained in each of the Examples and Comparative Examples were measured. However, in Comparative Example 6, the mold had a portion which had not been filled with a molded product after the foam molding, so that foaming was insufficient; therefore, the thermal conductivity and average cell diameter were not measured. The results are shown in Table 3. Table 3 also shows the HFO ratio with respect to each of the blowing agents.

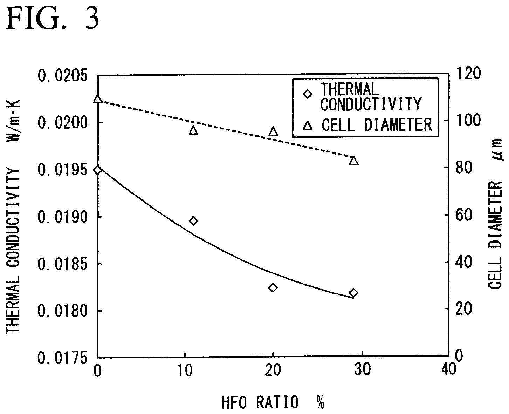

Further, FIG. 3 shows a graph in which the respective HFO ratios of Comparative Example 5, Examples 7 to 9, and Comparative Example 6 are plotted on the abscissa, and the values of thermal conductivity and cell diameter are plotted on the ordinate.

**[Table 3]**

| | Blowing agent | HF0 ratio of blowing agent | Thermal conductivity (W/m·K) | Average cell diameter (*µ*m) | L0I |
|---|---|---|---|---|---|
| Comp. Ex. 5 | 1 | 0 | 0.01949 | 110.0 | 32.41 |
| Ex. 7 | 2 | 11 | 0.01895 | 96.6 | 31.85 |
| Ex. 8 | 3 | 20 | 0.01823 | 95.7 | 31.74 |
| Ex. 9 | 4 | 29 | 0.01817 | 83.1 | 31.37 |
| Comp. Ex. 6 | 5 | 100 | Not measured due to defective filling of mold | | 36.35 |

As apparent from the above results, the phenolic resin foam of each of Examples 7 to 9 in which isopropyl chloride and cis-1,1,1,4,4,4-hexafluoro-2-butene were used in combination as blowing agents had a smaller average cell diameter and a lower thermal conductivity than the phenolic resin foam of Comparative Example 5 in which isopropyl chloride was used alone as a blowing agent. Further, the LOI values in Examples 16 to 27 were 28 % or more, which means that the flame retardancy was excellent.

In Comparative Example 6 using cis-1,1,1,4,4,4-hexafluoro-2-butene alone, the expandable phenolic resin composition was not sufficiently foamed under the same foam molding conditions as in Examples 7 to 9, and the resulting product was of low practical utility.

### <Examples 10 to 12, Comparative Example 7>

Examples 10 to 12 are reference examples not according to the present invention.
A phenolic resin foam was prepared in the same manner as in Examples 4 to 6 and Comparative Example 4, except that cis-1,1,1,4,4,4-hexafluoro-2-butene in blowing agents 2 to 5 was replaced by 2-chloro-3,3,3-trifluoropropene. The extraction pH of the resulting phenolic resin foam was measured and found to be 5 to 6 in each of the Examples and Comparative Examples.

The average cell diameter, thermal conductivity and LOI of the phenolic resin foam obtained in each of the Examples and Comparative Examples were measured. However, in Comparative Example 7, the mold had a portion which had not been filled with a molded product after the foam molding, so that foaming was insufficient; therefore, the thermal conductivity and average cell diameter were not measured. The results are shown in Table 4. Table 4 also shows the HFO ratio with respect to each of the blowing agents. Note that the HFO ratio in Table 4 is the mass ratio of 2-chloro-3,3,3-trifluoropropene to total mass (100) of isopropyl chloride and 2-chloro-3,3,3 -trifluoropropene.

**[Table 4]**

| | HF0 ratio of blowing agent | Thermal conductivity (W/m·K) | Average cell diameter (*µ*m) | L0I |
|---|---|---|---|---|
| Comp. Ex. 3 | 0 | 0.01928 | 121.8 | 33.69 |
| Ex. 10 | 11 | 0.01888 | 98.8 | 33. 72 |
| Ex.11 | 20 | 0.01837 | 92.6 | 33.61 |
| Ex. 12 | 29 | 0.01844 | 95.9 | 33. 98 |
| Comp. Ex. 7 | 100 | Not measured due to defective filling of mold | | 36. 94 |

As apparent from the above results, the phenolic resin foam of each of Examples 10 to 12 (reference examples) in which isopropyl chloride and 2-chloro-3,3,3-trifluoropropene were used in combination as blowing agents had a smaller average cell diameter and a lower thermal conductivity than the phenolic resin foam of Comparative Example 3 in which isopropyl chloride was used alone as a blowing agent. Further, the LOI values in Examples 16 to 27 were 28 % or more, which means that the flame retardancy was excellent.

In Comparative Example 7 using 2-chloro-3,3,3-trifluoropropene alone, the expandable phenolic resin composition was not sufficiently foamed under the same foam molding conditions as in Examples 10 to 12 (reference examples), and the resulting product was of low practical utility.

### <Examples 13 to 15, Comparative Example 8>

A phenolic resin foam was prepared in the same manner as in Examples 4 to 6 and Comparative Example 4, except that cis-1,1,1,4,4,4-hexafluoro-2-butene in blowing agents 2 to 5 was replaced by trans-1-chloro-3,3,3-trifluoropropene. The extraction pH of the resulting phenolic resin foam was measured and found to be 5 to 6 in each of the Examples and Comparative Examples.

The average cell diameter, thermal conductivity and LOI of the phenolic resin foam obtained in each of the Examples and Comparative Examples were measured. However, in Comparative Example 8, the mold had a portion which had not been filled with a molded product after the foam molding, so that foaming was insufficient; therefore, the thermal conductivity and average cell diameter were not measured. The results are shown in Table 5. Table 5 also shows the HFO ratio with respect to each of the blowing agents. Note that the HFO ratio in Table 5 is the mass ratio of trans-1-chloro-3,3,3-trifluoropropene to total mass (100) of isopropyl chloride and trans-1-chloro-3,3,3-trifluoropropene.

**[Table 5]**

| | HF0 ratio of blowing agent | Thermal conductivity (W/m·K) | Average cell diameter (*µ*m) | L0I |
|---|---|---|---|---|
| Comp. Ex. 3 | 0 | 0.01928 | 121.8 | 33.69 |
| Ex. 13 | 11 | 0.01899 | 91.9 | 33.16 |
| Ex. 14 | 20 | 0.01825 | 86.6 | 33.87 |
| Ex. 15 | 29 | 0.01829 | 96.3 | 33.71 |
| Comp. Ex. 8 | 100 | Not measured due to defective filling of mold | | 36.9 |

As apparent from the above results, the phenolic resin foam of each of Examples 13 to 15 in which isopropyl chloride and trans-1-chloro-3,3,3-trifluoropropene were used in combination as blowing agents had a smaller average cell diameter and a lower thermal conductivity than the phenolic resin foam of Comparative Example 3 in which isopropyl chloride was used alone as a blowing agent. Further, the LOI values in Examples 13 to 15 were 28 % or more, which means that the flame retardancy was excellent.

In Comparative Example 8 using trans-1-chloro-3,3,3-trifluoropropene alone, the expandable phenolic resin composition was not sufficiently foamed under the same foam molding conditions as in Examples 13 to 15, and the resulting product was of low practical utility.

From the comparison of the results of Examples 1 to 3 and the results of Examples 4 to 15, it was confirmed that when a silicone surfactant is used as a surfactant, the phenolic resin foam tends to have a higher LOI and a smaller average cell diameter, as compared to the case where a castor oil EO adduct is used.

### <Examples 16 to 27>

4 Parts by mass of silicone surfactant (trade name "SF-2936F", manufactured by Dow Corning Toray Co., Ltd., terminals of polyether chain: - OH) as a surfactant, and 4 parts by mass of urea as a formaldehyde catcher were added to 100 parts by mass of liquid resol type phenolic resin (trade name: PF-339, manufactured by Asahi Yukizai Corporation), followed by mixing, and the resulting mixture was allowed to stand at 20 °C for 8 hours.

To 108 parts by mass of the mixture thus obtained were added one of the following blowing agents 6 to 17 as a blowing agent in an amount (part by mass) as shown in Table 6, and 16 parts by mass of a mixture of paratoluenesulfonic acid and xylene sulfonic acid as an acid catalyst, followed by stirring to mix these components, thereby preparing an expandable phenolic resin composition.

This expandable phenolic resin composition was discharged into a mold of 300 × 300 × 45 mm, which had been heated for 300 seconds in a dryer at 70 °C. The resulting molded product was taken out from the mold and placed in a dryer heated to 85 °C where the molded product was cured for 5 hours, thereby preparing a phenolic resin foam.
Blowing agent 6: mixture of isopropyl chloride and trans-1-chloro-3,3,3-trifluoropropene with an isopropyl chloride : trans-1-chloro-3,3,3-trifluoropropene mass ratio of 50 : 50
Blowing agent 7: mixture of isopropyl chloride and trans-1-chloro-3,3,3-trifluoropropene with an isopropyl chloride : trans-1-chloro-3,3,3-trifluoropropene mass ratio of 30 : 70
Blowing agent 8: mixture of isopropyl chloride and trans-1-chloro-3,3,3-trifluoropropene with an isopropyl chloride : trans-1-chloro-3,3,3-trifluoropropene mass ratio of 10 : 90
Blowing agent 9: mixture of isopropyl chloride and cis-1,1,1,4,4,4-hexafluoro-2-butene with an isopropyl chloride : cis-1,1,1,4,4,4-hexafluoro-2-butene mass ratio of 50 : 50
Blowing agent 10: mixture of isopropyl chloride and cis-1,1,1,4,4,4-hexafluoro-2-butene with an isopropyl chloride : cis-1,1,1,4,4,4-hexafluoro-2-butene mass ratio of 30 : 70
Blowing agent 11: mixture of isopropyl chloride and cis-1,1,1,4,4,4-hexafluoro-2-butene with an isopropyl chloride : cis-1,1,1,4,4,4-hexafluoro-2-butene mass ratio of 10 : 90
Blowing agent 12: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene : cis-1,1,1,4,4,4-hexafluoro-2-butene mass ratio of 80 : 10 : 10
Blowing agent 13: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene : cis-1,1,1,4,4,4-hexafluoro-2-butene mass ratio of 80 : 15 : 5
Blowing agent 14: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene :
   cis-1,1,1,4,4,4-hexafluoro-2-butene mass ratio of 80 : 5 : 15
Blowing agent 15: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene :
   cis-1,1,1,4,4,4-hexafluoro-2-butene mass ratio of 60 : 20 : 20
Blowing agent 16: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene :
   cis-1,1,1,4,4,4-hexafluoro-2-butene mass ratio of 40 : 30 : 30
Blowing agent 17: mixture of isopropyl chloride, trans-1-chloro-3,3,3-trifluoropropene and cis-1,1,1,4,4,4-hexafluoro-2-butene with an isopropyl chloride : trans-1-chloro-3,3,3-trifluoropropene :
   cis-1,1,1,4,4,4-hexafluoro-2-butene mass ratio of 20 : 40 : 40

The average cell diameter, thermal conductivity and LOI of the phenolic resin foam obtained in each of the Examples and Comparative Examples were measured. The results are shown in Table 6. Table 6 also shows the HFO ratio with respect to each of the blowing agents. Note that the HFO ratio in Table 6 is the mass ratio of the total of trans-1-chloro-3,3,3-trifluoropropene and cis-1,1,1,4,4,4-hexafluoro-2-butene to the total mass (100 parts by weight) of the blowing agents.

**[Table 6]**

| | Blowing agent | HF0 ratio of blowing agent | Amount of blowing agent (Part by weight) | Thermal conductivity (W/m·K) | Average cell diameter (*µ*m) | L0I |
|---|---|---|---|---|---|---|
| Ex. 16 | 6 | 50 | 15.5 | 0.0173 | 59.5 | 32.3 |
| Ex. 17 | 7 | 70 | 15.5 | 0.0168 | 68.0 | 32.9 |
| Ex. 18 | 8 | 90 | 15.5 | 0.0165 | 54.6 | 33.3 |
| Ex. 19 | 9 | 50 | 18.7 | 0.0186 | 55.1 | 33.1 |
| Ex. 20 | 10 | 70 | 18.7 | 0.0177 | 64.8 | 31.6 |
| Ex. 21 | 11 | 90 | 18.7 | 0.0164 | 43.7 | 33.2 |
| Ex. 22 | 12 | 20 | 12.5 | 0.0179 | 57.0 | 32.1 |
| Ex. 23 | 13 | 20 | 12.5 | 0.0182 | 62.5 | 32.4 |
| Ex. 24 | 14 | 20 | 12.5 | 0.0182 | 62.5 | 32.2 |
| Ex. 25 | 15 | 40 | 14.3 | 0.0179 | 55.5 | 32.7 |
| Ex. 26 | 16 | 60 | 16.2 | 0.0173 | 69.7 | 31.8 |
| Ex. 27 | 17 | 80 | 18.0 | 0.0167 | 43.7 | 33.6 |

As apparent from the above results, the phenolic resin foam of each of Examples 16 to 27 in which isopropyl chloride was used in combination with one or both of trans-1-chloro-3,3,3-trifluoropropene and cis-1,1,1,4,4,4-hexafluoro-2-butene as blowing agents had a small average cell diameter and a low thermal conductivity. Further, the LOI values in Examples 16 to 27 were 28 % or more, which means that the flame retardancy was excellent.

The phenolic resin foam of the present invention include two or more types of halogenated hydrocarbons as a blowing agent in an expandable phenolic resin composition including a phenolic resin, a blowing agent, and an acid catalyst, whereby the he phenolic resin foam has excellent heat insulation and flame retardancy. Further, the expandable phenolic resin composition has good foamability. Therefore, the present invention has great industrial value.

## Claims

1. A phenolic resin foam comprising a phenolic resin, a blowing agent and a surfactant,
the blowing agent comprising two or more types of halogenated hydrocarbons, including at least one type of halogenated unsaturated hydrocarbon,
the phenolic resin foam having:
an average cell diameter of 120 µm or less;
a thermal conductivity of 0.019 W/m·K or less; and
a limiting oxygen index of 28 % or more,
wherein the average cell diameter is determined as indicated in the description, the thermal conductivity is measured in accordance with JIS A 9511: 2009, and the limiting oxygen index is measured in accordance with JIS K 7201-2: 2007,
wherein the blowing agent comprises a chlorinated saturated hydrocarbon and the chlorinated saturated hydrocarbon is isopropyl chloride, and
the at least one type of halogenated unsaturated hydrocarbon is at least one selected from the group consisting of trans-1-chloro-3,3,3-trifluoropropene and cis-1,1,1,4,4,4-hexafluoro-2-butene.

2. The phenolic resin foam according to claim 1, wherein a mass ratio of the chlorinated saturated hydrocarbon and the halogenated unsaturated hydrocarbon (chlorinated saturated hydrocarbon : halogenated unsaturated hydrocarbon) in the blowing agent is 9.9 : 0.1 to 0.1 : 9.9.

3. The phenolic resin foam according to claim 1 or 2, wherein the surfactant comprises a silicone surfactant.

4. The phenolic resin foam according to claim 3, wherein the silicone surfactant is a copolymer of dimethylpolysiloxane and a polyether.

5. The phenolic resin foam according to any one of claims 1 to 4, wherein the total amount of the halogenated hydrocarbons in the blowing agent is 70 parts by mass or more, based on 100 parts by mass of the blowing agent.

6. A method for producing a phenolic resin foam of any one of claims 1 to 5, which comprises foaming and curing an expandable phenolic resin composition comprising a phenolic resin, a blowing agent comprising two or more types of halogenated hydrocarbons, including at least one type of halogenated unsaturated hydrocarbon, an acid catalyst, and a surfactant,
wherein the blowing agent comprises a chlorinated saturated hydrocarbon and the chlorinated saturated hydrocarbon is isopropyl chloride, and
the at least one type of halogenated unsaturated hydrocarbon is at least one selected from the group consisting of trans-1-chloro-3,3,3-trifluoropropene and cis-1,1,1,4,4,4-hexafluoro-2-butene.

## Patentansprüche

1. Phenolharzschaumstoff, umfassend ein Phenolharz, ein Treibmittel und ein grenzflächenaktives Mittel,
wobei das Treibmittel zwei oder mehr Arten von halogenierten Kohlenwasserstoffen, einschließend mindestens eine Art von halogeniertem ungesättigtem Kohlenwasserstoff, umfasst
wobei der Phenolharzschaum aufweist:
einen mittleren Zelldurchmesser von 120 µm oder weniger eine Wärmeleitfähigkeit von 0,019 W/m·K oder weniger; und
einen Sauerstoffgrenzwertindex von 28 % oder mehr,
wobei der durchschnittliche Zelldurchmesser wie in der Beschreibung angegeben bestimmt wird, die Wärmeleitfähigkeit in Übereinstimmung mit JIS A 9511: 2009 gemessen wird und der Sauerstoffgrenzwertindex in Übereinstimmung mit JIS K 7201-2: 2007 gemessen wird,
wobei das Treibmittel einen chlorierten gesättigten Kohlenwasserstoff umfasst und der chlorierte gesättigte Kohlenwasserstoff Isopropylchlorid ist, und
die mindestens eine Art von halogeniertem ungesättigtem Kohlenwasserstoff mindestens eine ist, die aus der Gruppe ausgewählt ist, die aus trans-1-Chlor-3,3,3-trifluorpropen und cis-1,1,1,4,4,4-Hexafluor-2-buten besteht.

2. Phenolharzschaumstoff nach Anspruch 1, wobei ein Massenverhältnis des chlorierten gesättigten Kohlenwasserstoffs und des halogenierten ungesättigten Kohlenwasserstoffs (chlorierter gesättigter Kohlenwasserstoff : halogenierter ungesättigter Kohlenwasserstoff) im Treibmittel 9,9 : 0,1 bis 0,1 : 9,9 beträgt.

3. Phenolharzschaum nach Anspruch 1 oder 2, wobei das grenzflächenaktive Mittel ein Silikon-Tensid umfasst.

4. Phenolharzschaum nach Anspruch 3, wobei das Silikon-Tensid ein Copolymer von Dimethylpolysiloxan und einem Polyether ist.

5. Phenolharzschaum nach einem der Ansprüche 1 bis 4, wobei die Gesamtmenge der halogenierten Kohlenwasserstoffe im Treibmittel 70 Masseteile oder mehr beträgt, bezogen auf 100 Masseteile des Treibmittels.

6. Verfahren zur Herstellung eines Phenolharzschaumstoffs nach einem der Ansprüche 1 bis 5, welches das Schäumen und Härten einer expandierbaren Phenolharzzusammensetzung umfasst, die ein Phenolharz, ein Treibmittel, das zwei oder mehr Arten von halogenierten Kohlenwasserstoffen, einschließend mindestens eine Art von halogeniertem ungesättigtem Kohlenwasserstoff, umfasst, einen Säurekatalysator und ein grenzflächenaktives Mittel umfasst,
wobei das Treibmittel einen chlorierten gesättigten Kohlenwasserstoff umfasst und der chlorierte gesättigte Kohlenwasserstoff Isopropylchlorid ist, und
die mindestens eine Art von halogeniertem ungesättigtem Kohlenwasserstoff mindestens eine ist, die aus der Gruppe ausgewählt ist, die aus trans-1-Chlor-3,3,3-trifluorpropen und cis-1,1,1,4,4,4-Hexafluor-2-buten besteht.

## Revendications

1. Mousse de résine phénolique comprenant une résine phénolique, un agent gonflant et un tensioactif,
l'agent gonflant comprenant deux types ou plus d'hydrocarbures halogénés, comprenant au moins un type d'hydrocarbure insaturé halogéné,
la mousse de résine phénolique ayant :
un diamètre cellulaire moyen de 120 µm ou moins ;
une conductivité thermique de 0,019 W/m.K ou moins ; et
un indice limite d'oxygène de 28% ou plus,
dans laquelle le diamètre cellulaire moyen est déterminé comme mentionné dans la description, la conductivité thermique est mesurée conformément à JIS A 9511:2009, et l'indice limite d'oxygène est mesuré conformément à JIS K 7201-2:2007,
dans laquelle l'agent gonflant comprend un hydrocarbure saturé chloré et
l'hydrocarburé saturé chloré est le chlorure d'isopropyle, et
l'au moins un type d'hydrocarbure insaturé halogéné est au moins l'un choisi parmi le groupe consistant en le trans-1-chloro-3,3,3-trifluoropropène et le cis-1,1,1,4,4,4-hexafluoro-2-butène.

2. Mousse de résine phénolique selon la revendication 1, dans laquelle le rapport massique de l'hydrocarbure saturé chloré et de l'hydrocarbure insaturé halogéné (hydrocarbure saturé chloré : hydrocarbure insaturé halogéné) dans l'agent gonflant se situe dans l'intervalle allant de 9,9:0,1 à 0,1:9,9.

3. Mousse de résine phénolique selon la revendication 1 ou 2, dans laquelle le tensioactif comprend un tensioactif silicone.

4. Mousse de résine phénolique selon la revendication 3, dans laquelle le tensioactif silicone est un copolymère de diméthylpolysiloxane et d'un polyéther.

5. Mousse de résine phénolique selon l'une quelconque des revendications 1 à 4, dans laquelle la quantité totale des hydrocarbures halogénés dans l'agent gonflant se situe à 70 parties en masse ou plus, sur base de 100 parties en masse de l'agent gonflant.

6. Procédé de production d'une mousse de résine phénolique selon l'une quelconque des revendications 1 à 5, qui comprend le moussage et la réticulation d'une composition expansible de résine phénolique, comprenant une résine phénolique, un agent gonflant comprenant deux types ou plus d'hydrocarbures halogénés, comprenant au moins un type d'hydrocarbure insaturé halogéné, un catalyseur acide et un tensioactif,
dans lequel l'agent gonflant comprend un hydrocarbure saturé chloré et l'hydrocarburé saturé chloré est le chlorure d'isopropyle, et
l'au moins un type d'hydrocarbure insaturé halogéné est au moins l'un choisi parmi le groupe consistant en le trans-1-chloro-3,3,3-trifluoropropène et le cis-1,1,1,4,4,4-hexafluoro-2-butène.
